# EUROPEAN PATENT APPLICATION

(11) **EP 3 065 076 A1**
(43) Date of publication of application: **07.09.2016**
(21) Application number: 15157569.3
(22) Date of filing: 04.03.2015
(51) Int. Cl.: G06F 21/55, G05B 19/406, G06Q 10/06, G06Q 50/26

(54) **System and method for responding to a cyber-attack-related incident against an industrial control system**

(71) Applicant: Secure-Nok AS, 4021 Stavanger (NO)
(72) Inventor: deWitte, Paula, Houston, TX 77035 (US); Vieira, Aitor Couce, 4009 Stavanger (NO); Houmb, Siv Hilde, Houston, TX 77019 (US)
(74) Representative: Håmsø Patentbyrå ANS

(57) **Abstract**

There is described a method for responding to a cyber-attack-related incident against an industrial control system environment, the method comprising the steps of:
- collecting data and information from internal sources on the industrial control system:
- collecting data and information from sources external to the industrial control system;
- aggregating said data and information collected from internal and external sources into one or more databases and knowledge bases; and
- comparing said collected data and information to previously collected data and information so as to formulate a response to a detected cyber-attack-related incident against the industrial control system.

There is also described a system for responding to a cyber-attack-related incident against an industrial control system environment.

## Description

### Field of the Invention

The present invention is a method and a system for an incident response responding to cyber-attacks launched against operational technology environments that are built on complex, often hierarchical, physical arrangements of industrial control systems.

### Background of the Invention

Operational technology environments are the backbone of a nation's and the industrial critical infrastructure and contain a myriad of industrial control systems that must operate in real-time. Industrial control systems refer to the general class of devices including supervisory control and data acquisition (SCADA) systems, distributed control systems, programmable logic control devices, and single board computers and some combination of these types of equipment. Industrial control systems provide the automation in critical infrastructure assets including the electric power generation, transmission, and distribution; nuclear power plant generation; oil and gas and mining exploration, drilling, production, processing and transportation; large-scale shipping and transportation whether done by land, sea, or air; large-scale water pumping; and waste water and sewage treatment. Industrial control systems perform functions such as collecting and transmitting data from sensors; opening or closing valves, breakers, or pumps; starting operations of devices or terminating operations of devices; or monitoring the operational technology environment for abnormal conditions to alert the operator and possibly sound alarms. In the order 90% of world-wide critical infrastructure depends on industrial control systems correctly and optimally performing without unexpected delays or stoppage.

Industrial control systems are increasingly the target of cyber-attacks by criminals, terrorists, and hacktivists for their own respective motives to disrupt or threatening to disrupt operations. Cybersecurity incidents pose unique risks to industrial control systems, and even if the attacker does not intend the impact, disastrous consequences, such as deaths, serious injuries, environmental damage, long-term economic consequences, can result from a successful cyber-attack. One of the current cyber threats to the industrial control systems are the advanced persistent threat (APT) attacks or the "low-and-slow" attacks. Because of the functionality of the industrial control systems and the processes these industrial control systems execute, operational technology environments cannot use response mechanisms as used by more traditional information technology systems that run corporate or enterprise business systems. When a cyber-attack occurs in a traditional information technology system, (1) the system may have the option of being shut down as part of the response and remediation phases or (2) the cyber-attack may directly cause the system to become non-responsive or shut down. By contrast, in operational technology environment, an immediate or uncontrolled system shut down may leave the system in a state that poses a significant risk to the health, safety, and well-being of the public or environment. That is, a cyber-attack may not always be responded to by shutting down a critical component which may result in more damage than if the attacked system process had been allowed to run its course. For example, in nuclear power plants, ramping down a nuclear reactor must be done precisely within a controlled process or risk having an unintended consequence such as releasing radioactive contaminants into the atmosphere -- similar to what happened in Three Mile Island in the United States in 1979 when an operator misinterpreted data from the system and incorrectly and disastrously responded. Although Three Mile Island was not a cyber-attack, an attack could mimic the same situation resulting in the same consequences by presenting the user with erroneous data forcing a similar human response.

An example of a cyber-attack that caused significant damage to an industrial control system environment occurred with the Stuxnet attack on Iranian nuclear facilities discovered in 2009 and with later attacks by Flame discovered in 2012. These attacks changed the paradigm for cyber security attacks as they were targeted and long-term or advanced persistent threat (APT) attacks, often called "low and slow" because they are difficult to detect. For example, Flame is believed to have operated for more than three years before it was discovered.

Sophisticated monitoring and detection technologies maintain a continuing awareness of system security, vulnerabilities, and threats to a system in order to detect these attacks before the full impact of these cyber-attacks occurs. The optimal response would cause a response to the incident based on the knowledge provided by the monitoring and detection technologies. Clearly, the efficacy of this incident response system would depend on innovations that integrate monitoring and detection technologies into an adaptable, dynamic incident response system that is technology-independent (i.e., applicable to any manufacturer's industrial control system components) and applicable across any industrial control system domain, thus requiring an adaptable incident response system. Further, the incident response system must be dynamic because both the cyber-attacks including the threat landscape and the industrial control system environment are dynamic, requiring the system to account for and incorporate the specific details of the industrial control system configuration, the process the industrial control environment it is executing (e.g., drilling a deepwater oil and gas well versus an automated manufacturing), and the steps within that process.

The current state-of-the-art in cybersecurity for industrial control systems is not effective in protecting these systems from the more sophisticated execution of cyber-attacks prevalent today. Systems that are designed to respond to cyber-attacks and incidents are typically based on that same level and manner of cybersecurity technology protection and consequently, are equally ineffective. For example, much of the current cybersecurity technology depends on perimeter security which is routinely breached and allow many dangerous attacks to go undetected and become resident within the system. These successful cyber-attacks allow malware to reside within the perimeter security detectors (e.g., firewalls) and continue executing the attack without being detected. As such, the corresponding incident response system technologies in place can only respond and remediate when a perimeter security attack is detected.

Another draw-back of the prior art is that many of the incident response systems are designed to treat the cyber-attack by treating the entire system as a single unit instead of a system composed of subsystems. The incident response then attempts to shut down the entire system instead of analyzing attacks at the sub-system component levels, many of which are systems themselves.

Other incident response systems are static, meaning that they have a formulated plan and regardless of the circumstances of the situation keep to that plan by not taking into account (1) the continuous changing industrial control system environment, (2) an intelligent cyber-attack that can morph and change depending on what it detects, or (3) the need to address the specifics of the process being executed by the industrial control system, e.g., drilling a deepwater oil well versus running a nuclear power generation plant.

The real-time nature of industrial control systems requires precise synchronization of processes such as reading and transmitting data from sensors, managing the automation process, or performing mechanical or electrical functions based on the current status and state of the industrial control systems. There are two timing issues for any technology inserted into industrial control systems. The timing within the industrial control system must be precise within milliseconds and sometimes microseconds. As a first consequence, an incident response cannot introduce latency or delays into the industrial control system because of the overhead of the execution of the incident response system. Cybersecurity technology software used to monitor, detect, respond, or remediate a cyber-attack may slow the system down leading to an unperceivable delay to the human user, but unacceptable in an industrial control system. Latency, no matter how seemingly insignificant in an information technology environment, cannot be tolerated within an operational environment. As a second consequence, the incident response to a cyber-attack must not directly interfere with the timing of the control system and possibly risk causing additional damage. That is, the incident response cannot arbitrarily interfere with the functionality of the industrial control systems such as turning on or off values, reading from sensors, etc. to the detriment of the industrial control system. Any action by the incident response system must be carefully planned with a realization of possible consequences and rigorously executed.

This difference between the operational technology and the information technology environments is crucial in how each type of environment responds appropriately to a cyber-attack. These two timing issues are the salient distinctions between formulating a response to a cyber-attack on operational technology environments which are heavily dependent on industrial control systems and traditional information technology systems.

System administrators and managers use sophisticated monitoring technology to detect anomalous behavior within the industrial control system. Examples of anomalous behavior may be a violation of a security policy (e.g., not to use certain devices on the network) or a system usage metric that is not within its normal bounds (e.g., a significant and unexplainable spike in either CPU usage or access to the hard drive). This anomalous behavior is part of a larger pattern or attack sequence that includes a series of seemingly innocuous activities that when analyzed in their totality indicate that a cyber-attacker is performing some activity, e.g. espionage, testing, infiltration of malware, exfiltration of data, before launching the intended full-scale attack. That knowledge can be detected and is beneficial when responding to the cyber-attack.

The most effective and sophisticated monitoring and detection functionality is executed by or assisted by software modules that monitor the system continuously to detect anomalous behavior, analyze the data, and correlate activities related to anomalous behavior over a time span to detect that a cyber-attack incident is underway or imminent. The monitoring and detection functionality was described in WO 2014/109645 A1, the content of which is incorporated by reference herein.

The invention has for its object to remedy or to reduce at least one of the drawbacks of the prior art, or at least provide a useful alternative to prior art.

The object is achieved through features, which are specified in the description below and in the claims that follow.

The invention is defined by the independent patent claims. The dependent claims define advantageous embodiments of the invention.

In a first aspect, the invention relates to a method for responding to a cyber-attack-related incident against an industrial control system environment, the method comprising the following steps:
- collecting data and information from internal sources on the industrial control system:
- collecting data and information from sources external to the industrial control system;
- aggregating said data and information collected from internal and external sources into one or more databases and knowledge bases; and
- comparing said collected data and information to previously collected data and information so as to formulate a response to a detected cyber-attack-related incident against the industrial control system, wherein
- the step of collecting data and information from internal sources includes collecting data and information from the following sources:
- a monitoring and detection system for detecting any anomalous behaviour in said industrial control system,
- a physical and electronic configuration of the industrial control system and the assets within that system,
- a process being executed by said industrial control system, and
- real-time situational awareness and/or status of the industrial control system; and
- the step of collecting data and information from external sources includes collecting data and information from:
- a model of stakeholders comprising entities and/or individuals that have some measure of control that can directly affect a process leading to the incident and/or the entities or individuals that are directly or indirectly affected by the incident.

There is also described a computer program product comprising instructions for causing a processor for executing the steps according to the first aspect of the invention.

In a second aspect the invention relates to a system for responding to a cyber-attack-related incident against an industrial control system environment, the system comprising:
- an internal sources module comprising data and information from sources on the industrial control system;
- an external sources module comprising data and information from sources external to the industrial control system;
- an incident response execution module for aggregating data and information from said internal and external sources and comparing said data and information to previously collected data and information so as to formulate a response to a detected cyber-attack-related incident against the industrial control system, wherein:
- the internal sources module comprises:
- a monitoring and detection system for detecting any anomalous behaviour in said industrial control system,
- a physical and electronic configuration of the industrial control system and the assets within that system,
- a process being executed by said industrial control system, and
- real-time situational awareness and/or status of the industrial control system; and
- the external sources module comprises:
- a model of stakeholders comprising entities and/or individuals that have some measure of control that can directly affect a process leading to the incident and/or the entities or individuals that are directly or indirectly affected by the incident.

It should be noted that a system according to the present invention will also be denoted an "Adaptable and Dynamic Incident Response System" herein.

Besides the monitoring and detection data, The Adaptable and Dynamic Incident Response System takes as inputs data sources, the use of some of which is believed to be novel in itself, both external and internal to the industrial control system. Internal data sources include information about the industrial control system configuration, the status of the system, the environment in which it operates, the process and execution logic and operations the industrial control system executes, and the current status. These inputs capture the information of the aspects of the complex environment that contribute to the incident response. External data sources may include information both about the stakeholders in the incident and threat and attack patterns that indicate that a cyber-attack is occurring. These inputs capture the information necessary about the current state of the cyber-attack security knowledge.

The Adaptable and Dynamic Incident Response System may execute the logic in its algorithms and heuristics to assist the human user selecting corrective actions to respond to the cyber-attack incident. These corrective actions options depend on the execution of the logic in those algorithms and heuristics over the myriad knowledge base sources collected both from within and external to the industrial control system including the nature and timing of the attack, the state and status of the affected system, the process completion schedule, and the risk and consequences of an executed cyber-attack.

Consider the case where the monitoring and detection technologies detect anomalous behavior early in the attack or threat pattern. The Adaptable and Dynamic Incident Response System may execute its logic with its external and internal data sources and choose as the best course of action to immediately eliminate certain malware that renders the attack ineffective. Alternatively, The Adaptable and Dynamic Incident Response System may execute its logic with its external and internal data sources and choose as the best course of action to allow the industrial control system process to continue because the process will terminate before the attack can be fully executed. Then the industrial control system can be put into a state that does not imperil the health, safety, or welfare of the public, the stakeholders, the industrial control system itself and its environment and remediate the cyber-attack (e.g., remove malware). In fact, The Adaptable and Dynamic Incident Response System may respond on a continuum ranging from "no" to "low-level" to "high-level" actions, completely dependent on the totality of factors affecting the industrial control system and environment.

To summarize, the present invention is derived from a few salient shortcomings in the prior art:
- There are standard incident response processes and standards promulgated by international professional associations (e.g. NIST SP 800-61, ISO 27035); however, these incident response systems are generic or do not focus on operational technology, but rather information technology systems. First, the industrial control systems and supervisory control and data acquisition attacks in the operational technology environment may preferably be dealt with differently than cyber-attacks on corporate information technology networks. Often doing the wrong action can bring about more disastrous results than doing nothing. Secondly, an effective incident response technology may preferably be tailored for the specificity of the environment, attack, risk, and consequences so a general "one size fits all" response is not effective. The present invention develops a specific incident response system for operational technology making it adaptable, because the cyber-attack environment is dynamic and a system and method according to the present invention are integrated into the real-time monitoring and detecting functionality. Systems and methods according to the invention may preferably also be dynamic, learning from its knowledge to customize its output for the best possible response to a cyber-attack incident.
- Complex networks of industrial control system assets rely on the same basic components of programmable logic controllers, single board computers, etc. These basic components are configured for use and functionality in different domains. Incident response may be tailored to that specific domain because the nature of the functionality performed by the industrial control systems will dictate a different response based on that domain. That is, even though the basic hardware components are the same, a response to a cyber-attack on a deep-water drilling rig requires a different response than similar hardware components in a power grid or in a nuclear power generation plant. Therefore, an effective incident response system may preferably take into account (1) the details of the assets including their criticality in the process, potential consequences, and the risk of consequences and the functionality they're performing, both within the process and with respect to how that process is using an asset. The invention incorporates the knowledge of the configuration of these assets within the industrial control system configuration.
- Industrial control systems/supervisory control and data acquisition systems cannot be interfered operationally without the risk of dire consequences resulting from unstable states -one cannot just shut down a nuclear power generator or chemical processing plant as can be done more easily with corporate networks or standard information technology systems. Therefore a reliable incident response system may preferably have knowledge of the specific process itself, the process steps, the timing of the steps, and what industrial control system assets are affected to determine how best to respond. A system and method according to invention may incorporate this level of knowledge in several knowledge bases to derive the incident response. This differs from the proceeding observation because the former is the knowledge of the general domain while this knowledge component is about the specific execution.

- Without properly informing and guiding the human users in their various roles, there is a risk of human "over-reaction" and over-riding automatic system devices such as was done in Three Mile Island when the human operator mis-read data feeds and misinterpreted the consequences and caused the accident to occur. Therefore, there may preferably be a strong human user interface component that presents the information in a clear and meaningful manner and allows the user to drill down into the logic to understand the risks. A system and method according to the present invention may incorporate this into a visualization module.
- Proper incident response requires understanding the nature and timeliness of the attack as well as the complexities of the industrial control system environment. For example, malware may be present in the industrial control system but the best course of action may be to isolate the malware and continue operations because the cyber-attack cannot complete its execution before the process of the industrial control system has completed. There may be several possible courses of action. Before randomly selecting a possible course of action, an effective incident response system would be able to determine the best course of action. A system and a method according to the invention may incorporates this into a Scenario Simulation Module which simulates the various possible courses of actions, analyzes for any possible unintended side effects, and presents the user with the best options.

The system according to the present invention, herein also referred to as an Adaptable and Dynamic Incident Response System, may reduce the cost of re-building incident response systems to tailor it for specific industrial control system domains because it may segregate the knowledge necessary into executable knowledge bases resulting in cost savings, both in terms of time and financial expense and makes these knowledge assets re-usable.

The Adaptable and Dynamic Incident Response System for an operational environment incorporates several unique new developments to derive an incident response process to a cyber-attack threatening industrial control systems with possible catastrophic consequences specifically tailored to the dynamic circumstances of the situation and environment.

Major innovations within the present invention are believed to include (1) knowledge representation structures to store the information necessary to derive an incident response process in structured knowledge bases, i.e. in a formatted knowledge representation structure, and (2) algorithms and heuristics that execute their logic using the knowledge bases to make accurate, informed, and timely possible corrective actions to aid the human in making decisions. In the following various parts that may be part of a system according to the invention are presented. It should, however, be emphasized that the invention, in its broadest sense, is defined by the independent claims.

In the following are described examples of a preferred embodiments illustrated in the accompanying drawings, wherein:
- Fig. 1: shows a system according to the present invention;
- Fig. 2: shows an overview of a method according to the present invention; and.
- Figs. 3-3B: show, in more detail than in Fig. 2, a method according to the present invention.

It should be noted that the figures are shown schematically and simplified. Identical reference numerals will indicate identical or similar features in the drawings. In the following, the reference numeral 1 will denote a system according to the present invention.

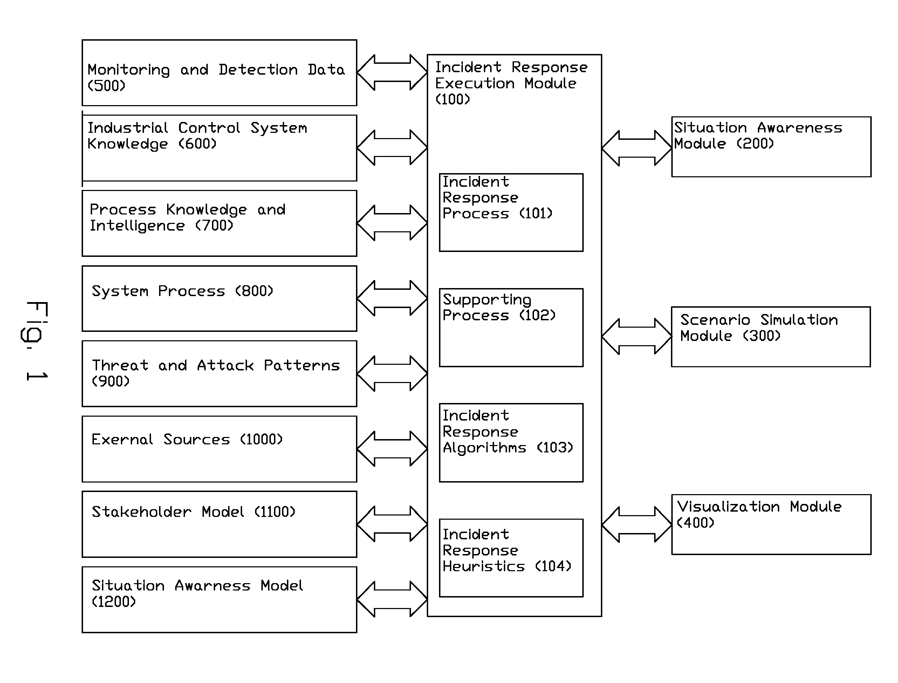

Figure 1 is an example illustration of an adaptive and dynamic incident response system for cyber-attacks against industrial control systems. The system is exemplified deployed with a core module; the incident response execution module 100 comprised of four supporting components; incident response process 101, supporting processes 102, incident response algorithms 103, incident response heuristics 104, and three supporting modules; situation awareness module 200, scenarios simulation module 300, and visualization module 400. These modules makes use of, create, update, modify and/or delete information/data in the following information, knowledge, experience and intelligence components, exemplified by the: monitoring and detection data 500, industrial control system knowledge 600, process knowledge and intelligence 700, system process 800, threat and attack patterns 900, external sources 1000, stakeholder model 1100, and situation awareness model 1200.

In the following, a more general overview a system according to a preferred embodiment is given, still with reference to Figure 1.
I) The incident response execution module 100 is the overarching software module that executes The adaptable and dynamic incident response system 1. The Incident Response Execution Module 100 comprises both algorithms and heuristics that execute decision logic on (1) which other module to execute, (2) which databases and knowledge bases to update and with what data, information, or knowledge; and (3) selecting the process for updating, including adding, deleting, and changing, data, information, and knowledge. The ultimate output from the incident response execution module 100 is a set of actions to respond to the incident with domain-specific knowledge.
II) The stakeholder model 1100 is a knowledge base about the stakeholders related to or associated with an incident. The stakeholder model 1100 knowledge is used by a scenario simulation module 300, as described below, to determine how an incident affects various stakeholders involved in the incident. The scenario simulation module 300 uses this analysis in deriving possible corrective actions which will be presented to the user through a visualization module 400. The stakeholder model 1100 is dynamic allowing the stakeholder knowledge to be changed or updated depending on a number of factors including (1) the specific state of the industrial control system, which assets are being used, and how these assets are being used or affected, from a system process model 800; (2) which process step of the process is being executed and the details of that process execution, from a Process Knowledge and intelligence Base 700, the system process model 800, and industrial control system knowledge 600; the timing and execution of the cyber-attack, from a threat and attack pattern knowledge 900 and external sources knowledge 1000.
III) The industrial control system knowledge 600 is the "what" in the industrial control system, i.e. the knowledge base of the industrial control system facility being monitored. This knowledge base includes the physical lay-out of the electronic assets, e.g. single board computers, programmable logic controllers, the relationship between assets, e.g. redundancy and dependence, and the functionality of the assets. The basic unit is the individual unit that can be turned on, off, or bypassed in an incident response plan, e.g. single board computer, programmable logic controller. Overlaying this knowledge is the process map linking assets to the specific steps of the process.
IV) The process knowledge and intelligence 700 is the "how" of the process operating on the industrial control system or the time-ordered steps that make up the functionality of the industrial control system including tying those time-ordered steps to the assets being used or affected by the process. As an example, on an industrial control system on a drilling rig, the process knowledge and intelligence 700 would be the knowledge base of the drilling process. Each step would be tied to the utilization of particular assets in the industrial control process based on the industrial control system knowledge.
V) The system process 800 is the instantiation of the industrial control system knowledge 600 and the process knowledge and intelligence 700 (the "what" and "how") that is specific to the specific targeted industrial control system. The industrial control system knowledge 600 refers to the knowledge about the physical layout of the industrial control system and the process knowledge and intelligence 700 refers to the as documented process for that industrial control system. The system process 800 is the actual instantiation of those two knowledge systems so that it represents the detailed specifics layout and process for those specific circumstances. The industrial control system knowledge 600 and process knowledge and intelligence 700 may comprise libraries of such physical lay-outs and the process (e.g., a drilling rig and drilling process). However, each operator has its own unique aspect for both and this knowledge is captured in the system process.
VI) Situational awareness module 1200 is the knowledge base where status of the industrial control system is maintained in a database that is updated to provide a real-time common operating picture of the industrial control system. The database is based upon constant updates with information from the industrial control system knowledge 600 (e.g., the state and status of various units within the industrial control system) and by the monitoring/detecting interface.
VII) The scenario simulation module 300 is a software simulation testbed that analyses possible scenarios based on information from the Situation Awareness to provide possible corrective actions for the industrial control system to respond to the incident in order to select the best course of action.
VIII) Threat and attack patterns 900 are a group of rigorous methods for identifying and tracking emerging threats and attacks related to industrial control system security and represented in a formal, executable manner.
IX) External sources 1000 are sources external to industrial control system environment and comprising data, information, and knowledge about cybersecurity that are open to anyone and available through the internet, websites, blogs, or other postings. Examples include external security blogs and discussions, databases of vulnerabilities and associated information, standards, information from vendors.
X) The visualization module 400 will be the key human machine interface between the human user and the Invention. The Visualization Module presents the User with both textual and graphical models of data with indicators of threat level, risk, etc. The visualization module is capable of executing a number of response scenarios, assisting the user in determining which response scenario is the most applicable and effective in those particular circumstances.

Paragraphs I-VII above, being part of the above-mentioned knowledge representation structures, are described in more detail below

### The incident response execution module 100 / Incident response process

All incidents have some activities, objectives, or goals in common-if nothing else than to stop the incident, usually as quickly as possible. There are generic incident response systems that include activities for both manual and limited automated response. What makes incident response so difficult in an operational technology environment is the complexity of the industrial control system, its environment and associated processes as well as the nature and execution of a cyber-attack requiring an incident response to be dynamic and complex reflecting the nature of the industrial control environment. The response itself is stochastic - reflecting the uncertainty of the dynamic nature of the environment and the attack. To be successful, the response should preferably be able to change itself in response to what occurs in the environment or if the cyber-attack - perhaps sensing detecting - morphs itself. Because of the criticality of the response, the users are typically under a stressful situation responding within limited time and resource constraints requiring the system to be open, transparent, and able to explain its reasoning to the level of detail the user requires. To be prepared, the incident response may preferably account for the logic of its processes to explain its recommended corrective actions, be a detailed plan with time-ordered activities, and may incorporate detailed procedures for making changes to the environment.

### The stakeholder model 1100

Stakeholder models according to the prior art are not structured within an executed knowledge base and typically do not differentiate between a number of useful factors and knowledge about stakeholders. The stakeholder model is built on several assumptions: First, specific stakeholders or types of stakeholders have varying degrees of power and control that give them capabilities. For example, some stakeholders can cause the incident intentionally or because of negligence. The same stakeholder may or may not have the capability to affect the response or to affect the outcome or consequences resulting from the incident. Secondly, types of stakeholders have different roles and tasks before, during, and after the incident that affects the incident response plan. A third example is the importance of timing to the stakeholder. That is, a stakeholder's status or role may change, with power and control being increased or decreased at different times.

The present invention takes into account both the dynamic nature and complexity of stakeholders in the incident response system and process. This knowledge about the stakeholders may preferably be incorporated into a useful incident response plan. The additional information put into the stakeholder model is not captured in incident response planning systems according to the prior art. The stakeholder model models organize the stakeholders in a hierarchy that mirrors the reality of what occurs. The stakeholder model takes into account several aspects and questions in defining the stakeholders including:
- Does the stakeholder have the required capabilities and can it act within its authority and power to affect, control, or manage the actions, decisions, or policies that created, lead to, or is leading to the incident?
- Does the stakeholder have the required capabilities and can act within its authority and power to affect, control, or manage the actions, decisions, or policies that are made responding to the incident?
- Are the stakeholders immediately and directly affected by the incident or directly affected within a relative short time by the incident?
- Are the stakeholders not immediately and directly affected by the incident no directly affected with a relative short period of time, but eventually affected by some aspect of the incident-its causes, response, or consequences?

The present invention may take into account the complexity of the stakeholders: Stakeholders constitute a dynamic network, have disparate status, varying degrees of capabilities, varying degrees of permission to act, various degrees to affect, control, or manage direction and outcomes; etc. The knowledge about the stakeholders included in a stakeholder model may be represented by an ontology which captures the complexity and dynamic relationship of the relationships among the stakeholders as well as the complexity of the knowledge about the stakeholders.

To represent the disparate nature of the stakeholders, within the exemplary embodiment of the invention, there has been created a taxonomy of three major classes of stakeholders:
Primary stakeholders: Those individuals and entities that are held responsible for the incident because they were in control when the incident occurred. They directly affect the incident response. Primary stakeholders may have prepared a response policy, plan, and procedures in case an incident occurred. This plan would set in motion the process to contain, eradicate, and recover from the incident. After the incident is successfully contained, the primary stakeholders typically conduct a post-incident analysis to further refine their understanding of the causes and effects of the incident and make changes accordingly to their policy, plan, and procedures.

Secondary stakeholders: Those individuals and entities that have no direct control over the incident but are affected by the incident. They are those "innocent" parties typically hurt most by the incident.

Latent stakeholders: External stakeholders who are not responsible or involved in the incident but are impacted by changes caused by the incident such as mandatory regulations, professional standards, accepted industry practices - which are changed as a result of the incident

At the time of the incident, the primary and secondary stakeholders are usually known or soon known while the latent stakeholders may not be known for some time. The goal of the stakeholder model is to understand what and how individuals and entities affect and/or are affected by the incident; to plan and assign incident response roles, responsibilities, and tasks to primary stakeholders; and to notify or involve secondary or latent stakeholders as appropriate during the incident response.

Some examples of stakeholders in an incident response plan include equity owners, directors, the government, professional organizations, the immediate community, the general public, or the industry. Traditional explanations of stakeholder systems minimally define stakeholder as a person or entity, e.g. a group, association, company, or industry, with an interest or concern in something, usually a business.

For example: In the Macondo oil spill disaster, British Petroleum (BP) as operator, Transocean as drilling contractor, and Halliburton as the cement contractor were primary stakeholders. The three companies had the capability to affect, control, or manage the actions, decisions, or policies that led to the incident-albeit with different levels of authority. However, each company shared responsibility for the factors leading to the incident. Secondary stakeholders included shareholders in these companies, all industries and individuals affected in the five state area that the spill impacted, etc. - those with little or no control in the incident but greatly affected by it. Latent stakeholders included innocent oil and gas operators whose work was disrupted, the industry whose regulations changed, etc. perhaps some time after the initial incident terminated.

It should also be noted that the stakeholder model, i.e. the way of structuring a model of involved stakeholders and using this model as an input when preparing a response to a cyber-attack-related incident against an industrial control system as described above, is believed to be novel and inventive in itself, not only incorporated into a system and method according to the present invention, but in any system and method with the aim of responding to a cyber-attack-related incident against an industrial control system.

### Industrial control system knowledge 600 (or Knowledge of the lay-out and functionality) - the "What"

This knowledge component is encapsulated in a knowledge representation structure so that the knowledge can be used during execution of the incident response. This knowledge includes the lay-out of the particular industrial control system, its network of components, the relationships of components to other components, and the components' functions within the industrial control system. Because each industrial control system is unique, a system and method according to the present invention may utilize a capability for a user to build a computable representation of the structure and functionality capturing the necessary details and specifics of the industrial control system. One possible knowledge representation strategy is an ontology, but other representation structures exist and may be used. Examples of novel features of the present industrial control system knowledge are believed to be (1) the process by which this knowledge is used in the incident response system and (2) the capture and execution of this knowledge within the incident response system.

Because the industrial system typically is hierarchical, the knowledge representation structure may replicate the knowledge about the hierarchy capturing the knowledge in relationships such as *is-a, is-a-subclass-of, is-a-superclass-of,* or *is-defined-as.* The knowledge representation structure will capture the hierarchy to the level of detail necessary to enable an incident response process, typically to the individual single board computer or programmable logic controller device and not the components within those devices. Other important knowledge will include the redundancy built into the system, such as assuming two programmable logic controllers in parallel, if programmable logic controller 1 is incapacitated; can programmable logic controller 2 do the work for both devices? The knowledge representation structure may also capture the status of each device.

### Process knowledge and intellicience 700 (or knowledge of the specific industrial control system process) - the "How"

The incident response process in The Adaptable and Dynamic Incident Response System will typically utilize knowledge from several sources. One source is the knowledge of the specific process being performed by the industrial control system. For example, in a system for drilling a hydrocarbon well, this knowledge component would be a process map of the drilling process. The process map would have (1) the activities associated with drilling and their timing in relationship to each other, and (2) all relevant information such as which pieces of equipment are being used and at what function. Hence, this aspect of the invention is specific to each installation. This part of the system provides the process map editor to define the process knowledge and the manner in which the process map is executed by the Adaptive and Dynamic Incident Response System.

### Situational awareness module 200

The situational awareness module captures information about the totality of the operational technology environment including two disparate aspects: (1) The status and states of the industrial control system itself and its equipment and (2) the status and states of the cyber infrastructure including detected threats and attacks. The first aspect has to do with the step of the process the industrial control system is in to better determine what corrective actions are possible and their timing. The second aspect includes a continuous information feed from the monitoring/detection technology Modules 500 that detect anomalous behavior indicative of an advanced persistent threat and/or attack; so that if anomalous behavior is detected or security-related incidents or accidents, e.g. warning of USB insertion, reported, the system can determine the nature of specific attacks to anticipate what possible actions can occur; and determine a cursory threat level and status; and passes relevant information and knowledge to the scenario simulation module.

### Scenario simulation module 300

When an incident is detected, there may be several possible ways to respond and remediate. What often happens is that what seems to be the best or perhaps an adequate plan causes unintentional side effects that inhibit the efficacy of the incident response and remediation. Often incident response becomes more of an experimental hit and miss, trying to determine the best course of action. The present invention may include a capability to simulate possible incident response scenarios to determine the best paths forward. The simulation may also be dynamic so that new information can change the course of action, if necessary.

The simulation may determine the most probable propagation patterns of the potential attacks and their impacts and assign a risk level. For example, an attack could have a high probability of occurring, but a low impact. A far-fetched example of the latter may be malware attacking a motor on a fan in an office within the critical infrastructure. The scenario simulation module assesses the risk of several scenarios of possible consequences using a dynamic risk management assessment, determines the likelihood and criticality of the attack to determine the nature of the attack and compare the timing of and execution of the attack with the process and mission of the industrial control system to suggest possible corrective actions based on all relevant dynamic factors, e.g. step in the process, nature and timing of attack.

### Threat and attack patterns 900 and external sources 1000

Threat and attack patterns and external sources are external data sets formulated into some type of knowledge representation structure to be executed by The Adaptable and Dynamic Incident Response System.

Assessments of threats may be a significant aspect of the Invention. The Threat and Attack Patterns may be found in several formats. The system and method according to the invention does not rely on any specific format or style. Rather, it is the knowledge of the threat and attack patterns and how they are processed by the incident response system and method as whole that is believed to be novel. Similarly, the present invention does not depend on static types or formats of information of external sources. Rather, it is using this information and fusing information from disparate sources to create knowledge that is novel in itself.

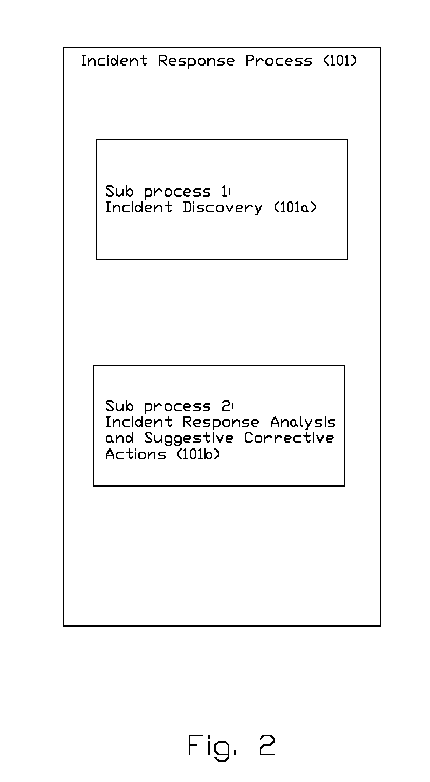

Figure 2 illustrates a generalized example of a method according to the second aspect of the invention; an incident response process comprised of two example sub processes: incident discovery 101a and incident response evaluation and suggested corrective actions 101b. The incident discovery 101a was disclosed in the above-mentioned WO 2014/109645 A1 which is incorporated by reference herein, and reference is once again made thereto for a more detailed description of the incident discovery part 101a. An incident response process may have more than two sub processes. The purpose of sub process 1 - incident discovery 101a is data gathering, aggregation, evaluation and analysis. The main outcome of sub process 1 is the result of incident analysis. The incident analysis is the main input to sub process 2 - incident response analysis and suggestive corrective actions 101b. Note that there may be any number of iterations within each sub process and across the two sub processes.

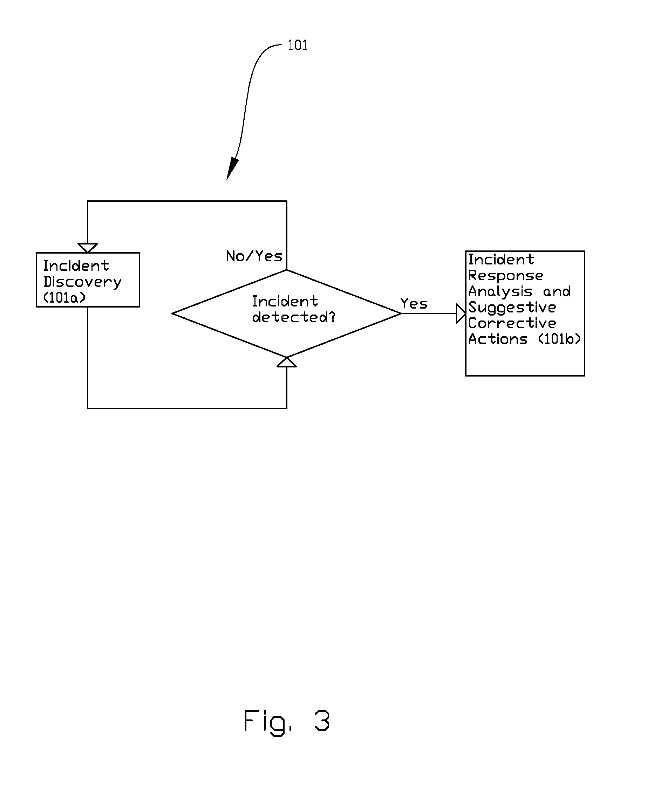

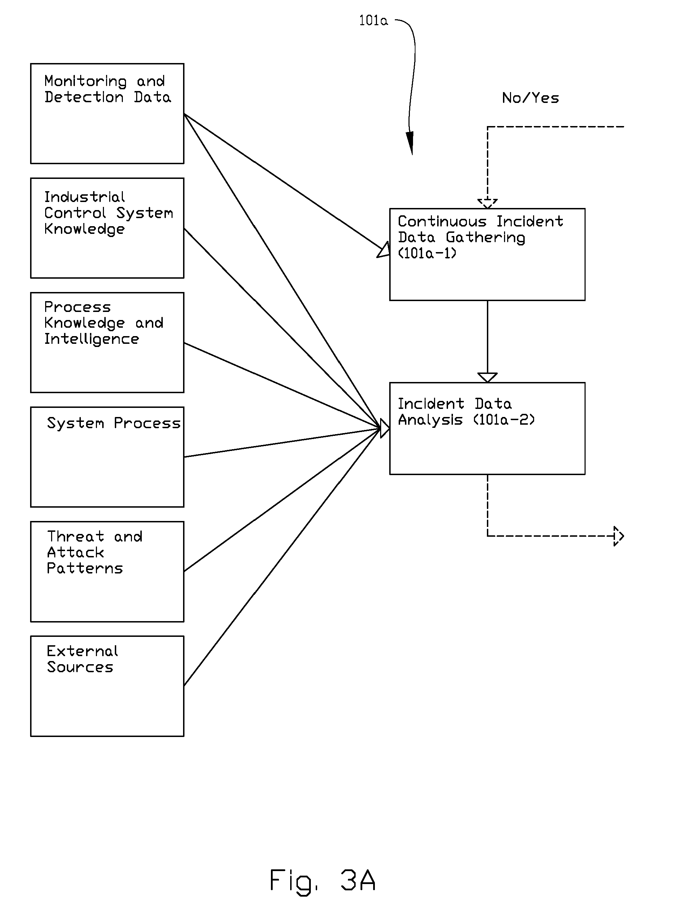

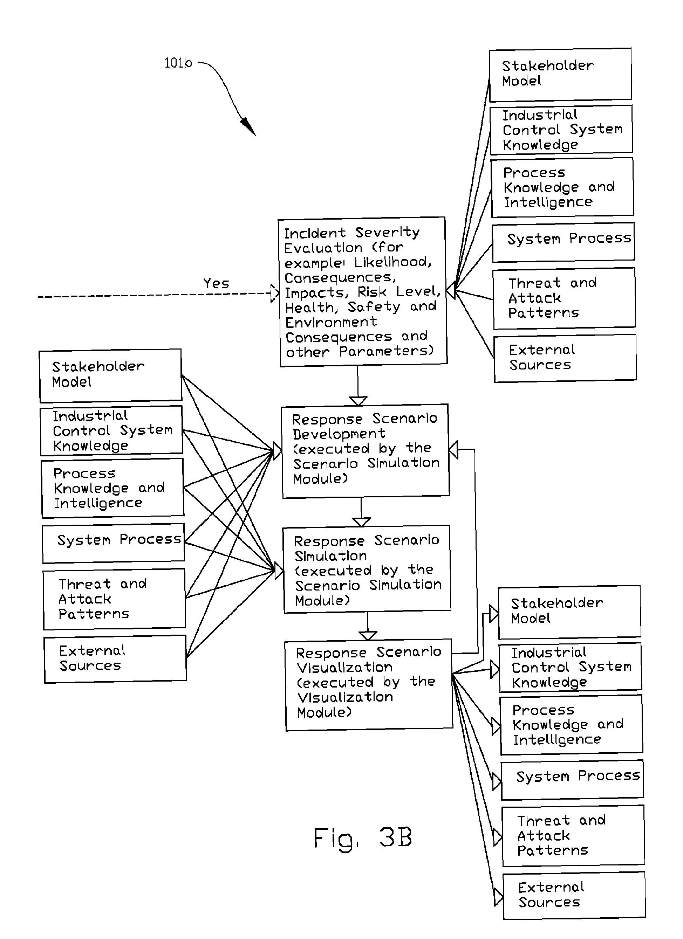

Figures 3, 3A and 3B illustrate, in more detail than Figure 2, an example flow diagram for a method according to the second aspect of the invention; an incident response process including the above-mentioned two main sub processes; incident discovery 101a comprised of: incident data gathering101a-1 and incident data analysis101a-2; and incident response evaluation and suggested corrective actions 101b comprised of: incident severity evaluation, response scenario development, response scenario simulation, and response scenario visualization. The user interacts with the response scenario visualization through the visualization module and chose or execute suggested corrective actions accordingly possibly leading to modifications to any of the following information knowledge bases: stakeholder model, industrial control system knowledge, process knowledge and intelligence, system process, threat and attack patterns and external sources.

Sub process 1 - incident discovery 101a - takes a number of data sources as input and produces the result of incident analysis as output. The process is iterative in that it will gather and analysis data continuously, also in cases where an incident is discovered. Once an incident is discovered, the incident discovery sub process 101a outputs the data to the incident response evaluation and corrective actions 101b. At the same time the incident discovery process 101a continues the data gathering and incident data analysis. The incident discovery process 101a can take any number of data sources on monitoring and detection data as input. This could be any number of proprietary monitoring systems, operational and sensor data, dedicated cybersecurity or security monitoring systems such as Security and Information Event Management (SI-EM) and similar as input to the continuous incident data gathering module 101a-1. The incident data analysis module 101a-2 takes the result from the continuous incident data gathering 101a-1 and executes a number of incident data analysis on the collected incident data using a variety of models, heuristics and algorithms that takes one or more of the following as input into the analysis: industrial control system knowledge, process knowledge and intelligence, system process, threat and attack patterns and external sources. All these and more input sources are used in the incident data analysis for a number of incident discovery and analysis analysis. In cases where an incident is detected the incident data analysis module 101b sends the incident data and the result of the incident data analysis to the incident response and corrective actions sub process 101b.

The incident response and corrective actions sub process 101b takes the incident data and the result of the incident data analysis from the incident data analysis module 101a-2 of incident discovery process 101a and starts executing the incident response and corrective actions sub process. The first step in the process is to evaluate the severity of the discovered incident using various parameters such as but not limited to: likelihood, consequence, impact, risk level, health, safety and environment consequences and other parameters. The incident severity analysis is executed using a number of inputs, such as but not limited to: the stakeholder model outlining the stakeholders of relevant and their various priorities, industrial control system knowledge with details regarding the particular industrial control system, process knowledge and intelligence with details regarding the relevant operations process, system process, threat and attack patterns of known and unknown threats and attacks patterns, scenarios and more, and external sources being any source external to the industrial control system providing data and information of relevance. Once the incident severity has been determined, the scenario simulation module starts developing alternative and potential response scenarios. The response scenario development is supported by a number of knowledge, information and experience sources, such as but not limited to: stakeholder model. Industrial control system knowledge, process knowledge and intelligence, system process, threat and attack patterns and external sources. The output from the response scenario development is a number of alternative response scenarios that are then simulated using a number of models, heuristics and algorithms by the scenario simulation model using a number of knowledge, experience and information sources including but not limited to: stakeholder model. Industrial control system knowledge, process knowledge and intelligence, system process, threat and attack patterns and external sources. The response scenario simulation results in a number of alternative response scenarios. The alternative response scenarios are visualized using the visualization module using a variety of means. The result of the response scenario simulation and the alternative corrective actions might lead to updates in one or more of: stakeholder model. Industrial control system knowledge, process knowledge and intelligence, system process, threat and attack patterns and external sources.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements.

The mere fact that certain measures are recited in mutually different dependent claims does not indicate that a combination of these measures cannot be used to advantage.

The computer program product for implementing the method according to the invention may also be implemented, fully or partially, by means of hardware comprising several distinct elements, and by means of a suitably programmed computer. In the system claim enumerating several means, several of these means may be embodied by one and the same item of hardware.
1. Method for responding to a cyber-attack-related incident against an industrial control system environment, the method comprising the following steps:
   - collecting data and information from internal sources on the industrial control system:
   - collecting data and information from sources external to the industrial control system;
   - aggregating said data and information collected from internal and external sources into one or more databases and knowledge bases; and
   - comparing said collected data and information to previously collected data and information so as to formulate a response to a detected cyber-attack-related incident against the industrial control system, characterized in:
   - that the step of collecting data and information from internal sources includes collecting data and information from the following sources:
   - a monitoring and detection system for detecting any anomalous behaviour in said industrial control system,
   - a physical and electronic configuration of the industrial control system and the assets within that system,
   - a process being executed by said industrial control system, and
   - a real-time situational awareness and/or status of the industrial control system; and
   - that the step of collecting data and information from external sources includes collecting data and information from:
   - a model of stakeholders comprising entities and/or individuals that have some measure of control that can directly affect a process leading to the incident and/or the entities or individuals that are directly or indirectly affected by the incident.
2. Method according to claim 1, wherein the step of collecting data and information from external sources includes collecting data and information on currently known threat and attack patterns that may be relevant to the incident.
3. Method according to claim 1 or 2, wherein the step of collecting data and information from external sources includes collecting data and information form cyber security incident information available through open sources, such as on the internet, websites, blogs, and other postings.
4. Method according to any of the preceding claims, wherein the method, prior to the step of aggregating said internal and external data and information, comprises step of reformatting said external data and information, and wherein the method after the step of reformatting said external data and information comprises the step of aggregating said data into databases and knowledge bases structured in an executable form.
5. Method according to any of the preceding claims, wherein the method, after having identified a cyber-attack- related incident, further includes formulating one or more incident response plans including corrective actions.
6. Method according to claim 5, wherein the method further comprises the step of simulating one or more of said incident response plans so as to determine possible consequences and side-effects of said one or more incident response plans in order to select the best possible plan for the response.
7. Method according to claim 6, wherein the method further comprises the step of visualizing one or more simulated incident response plans to a user.
8. Method according to claim 7, wherein the method further comprises the step of providing explanations, for the user, for the one or more incident response plans presented.
9. Computer program product comprising instructions for causing a processor to execute a method according to any of the claims 1-8.
10. System for responding to a cyber-attack-related incident against an industrial control system environment, the system comprising:
   - an internal sources module comprising data and information from sources on the industrial control system;
   - an external sources module comprising data and information from sources external to the industrial control system;
   - an incident response execution module for aggregating data and information from said internal and external sources and comparing said data and information to previously collected data and information so as to formulate a response to a detected cyber-attack-related incident against the industrial control system, characterized in:
   - that the internal sources module comprises:
   - a monitoring and detection system for detecting any anomalous behaviour in said industrial control system,
   - a physical and electronic configuration of the industrial control system and the assets within that system,
   - a process being executed by said industrial control system, and
   - a real-time situational awareness and/or status of the industrial control system; and
   - that the external sources module comprises:
   - a model of stakeholders comprising entities and/or individuals that have some measure of control that can directly affect a process leading to the incident and/or the entities or individuals that are directly or indirectly affected by the incident.
11. System according to claim 10, wherein the external sources module further comprises data and information on currently known threat and attack patterns that may be relevant to the incident,
12. System according to claim 10 or 11, wherein the external sources module further comprises cyber security incident information available through open sources such as on the internet, websites, blogs, and other postings.
13. System according to any of the claims 10-12, wherein the system further comprises a simulation module for simulating one or more incident response plans so as to determine possible consequences and side-effects of said one or more incident response plans in order to select the best possible plan for the incident response.
14. System according to claim 13, wherein the system further comprises a visualization module for visualizing one or more incident response plans to a user.

## Claims

1. Method for responding to a cyber-attack-related incident against an industrial control system environment, the method comprising the following steps:
- collecting data and information from internal sources on the industrial control system:
- collecting data and information from sources external to the industrial control system;
- aggregating said data and information collected from internal and external sources into one or more databases and knowledge bases; and
- comparing said collected data and information to previously collected data and information so as to formulate a response to a detected cyber-attack-related incident against the industrial control system, **characterized in:**
- **that** the step of collecting data and information from internal sources includes collecting data and information from the following sources:
- a monitoring and detection system for detecting any anomalous behaviour in said industrial control system,
- a physical and electronic configuration of the industrial control system and the assets within that system,
- a process being executed by said industrial control system, and
- a real-time situational awareness and/or status of the industrial control system; and
- **that** the step of collecting data and information from external sources includes collecting data and information from:
- a model of stakeholders comprising entities and/or individuals that have some measure of control that can directly affect a process leading to the incident and/or the entities or individuals that are directly or indirectly affected by the incident.

2. Method according to claim 1, wherein the step of collecting data and information from external sources includes collecting data and information on currently known threat and attack patterns that may be relevant to the incident.

3. Method according to claim 1 or 2, wherein the step of collecting data and information from external sources includes collecting data and information form cyber security incident information available through open sources, such as on the internet, websites, blogs, and other postings.

4. Method according to any of the preceding claims, wherein the method, prior to the step of aggregating said internal and external data and information, comprises step of reformatting said external data and information, and wherein the method after the step of reformatting said external data and information comprises the step of aggregating said data into databases and knowledge bases structured in an executable form.

5. Method according to any of the preceding claims, wherein the method, after having identified a cyber-attack- related incident, further includes formulating one or more incident response plans including corrective actions.

6. Method according to claim 5, wherein the method further comprises the step of simulating one or more of said incident response plans so as to determine possible consequences and side-effects of said one or more incident response plans in order to select the best possible plan for the response.

7. Method according to claim 6, wherein the method further comprises the step of visualizing one or more simulated incident response plans to a user.

8. Method according to claim 7, wherein the method further comprises the step of providing explanations, for the user, for the one or more incident response plans presented.

9. Computer program product comprising instructions for causing a processor to execute a method according to any of the claims 1-8.

10. System for responding to a cyber-attack-related incident against an industrial control system environment, the system comprising:
- an internal sources module comprising data and information from sources on the industrial control system;
- an external sources module comprising data and information from sources external to the industrial control system;
- an incident response execution module for aggregating data and information from said internal and external sources and comparing said data and information to previously collected data and information so as to formulate a response to a detected cyber-attack-related incident against the industrial control system, **characterized in:**
- **that** the internal sources module comprises:
- a monitoring and detection system for detecting any anomalous behaviour in said industrial control system,
- a physical and electronic configuration of the industrial control system and the assets within that system,
- a process being executed by said industrial control system, and
- a real-time situational awareness and/or status of the industrial control system; and
- **that** the external sources module comprises:
- a model of stakeholders comprising entities and/or individuals that have some measure of control that can directly affect a process leading to the incident and/or the entities or individuals that are directly or indirectly affected by the incident.

11. System according to claim 10, wherein the external sources module further comprises data and information on currently known threat and attack patterns that may be relevant to the incident,

12. System according to claim 10 or 11, wherein the external sources module further comprises cyber security incident information available through open sources such as on the internet, websites, blogs, and other postings.

13. System according to any of the claims 10-12, wherein the system further comprises a simulation module for simulating one or more incident response plans so as to determine possible consequences and side-effects of said one or more incident response plans in order to select the best possible plan for the incident response.

14. System according to claim 13, wherein the system further comprises a visualization module for visualizing one or more incident response plans to a user.
